# EUROPEAN PATENT SPECIFICATION

(11) **EP 1 769 675 B1**
(45) Date of publication and mention of the grant of the patent: **02.11.2011**
(21) Application number: 06380128.6
(22) Date of filing: 24.05.2006
(51) Int. Cl.: A01G 9/10, A01G 31/00

(54) **Gel used for moisturizing plants or parts thereof**
Gel zum befeuchten von Pflanzen oder Teilen davon
Gel pour humidifier des plantes ou des parties de plantes

(30) Priority: 28.09.2005 ES 200502440 P; 09.01.2006 ES 200600035 P
(43) Date of publication of application: 04.04.2007
(73) Proprietor: Nuria Sardá Cortés, S.L., 08023 Barcelona (ES)
(72) Inventor: Dotti Sardà, José Luis, 08023 Barcelona (ES); Dotti Sardà, Joan, 08023 Barcelona (ES)
(74) Representative: Gislon, Gabriele

(56) References cited:
- WO-A-02/44108
- DE-A1- 4 125 903
- US-A- 4 865 640
- US-A- 4 985 061
- US-B1- 6 688 038

## Description

### Field of the invention

In general, the present invention concerns to a hydrating gel applicable to the hydration of plants or parts of plants, such as plants and/or flowers with their stems, through the gradual release of their components and, in particular, to a hydrating gel comprising one or more colorant agents. In addition to its hydrating properties, the proposed gel also possesses substrate fertilising properties, in the case it is applied to rooted plants in a substrate, or nutrient properties in the case it is directly applied to plants and/or flowers with their stems.

Moreover, in addition to the described properties, the proposed gel also possesses a perfuming effect of the environment in which it is applied through the gradual release of one or more aromatising agents included therein.

### State of the art

Various proposals are known that propose the creation or use of compositions in the form of gel, the purpose of which is to treat plants in order to hydrate, nourish and disinfect them, etc.

Patent US4865640 describes a humidifying agent in the form of a substrate susceptible to being used to feed plants, mixing it with the soil in which they are planted or arranged in the form of layers with respect to the soil. Said agent comprises a highly viscous substance that gradually releases water and air when it interacts with biological organisms present in the soil environment in which it is applied.

Utility model ES-A-1054769, belonging to the present applicant, concerns to a dispensing container of hydric substance for hydrating and improving soils, adapted to be placed on the soil close to a plant in order to dispense various substances to the soil, such as fertilisers, insecticides, fungicides or any class of fertiliser, through the use of, in certain embodiments, a high-viscosity gel or substrate similar to that described in patent US4865640, which provides slow dispensing of said substances to the soil, which means it is not necessary to replace the container until after quite a few days, since its contents will not be emptied up until then.

US6688038 proposes a mulch composition with a colorant trapped in a gelled mass.

Such proposals are only focussed on the treatment of plants planted in soil, with the gel reacting on interaction with the organisms contained in said soil. Moreover, the gels proposed or employed by the devices proposed in said documents do not have any decorative or aromatising properties.

### Disclosure of the invention

It is considered necessary to offer an alternative to the state of the art by providing a gel that, in addition to possessing the properties already known in conventional gels, have other additional ones, together with being able to react on interacting with biological organisms present in other media apart from soil, such as air, or in the plants themselves.

The present invention concerns to a hydrating gel applicable to the hydration of plants or parts of plants, of the type comprising hydric substances suitable for producing said hydration and is adapted for gradually release at least said substances on interacting with biological organisms present in the environment in which it is applied, providing a slow rate dispensing of said substances.

Said gel also comprises at least one additional first substance consisting of a colorant agent, encapsulated or integrated into the gelled mass in order to provide the gel with decorative properties.

Said colorant agent is referably of those employed in the food industry The gel comprises a second additional substance consisting of an aromatising agent, and is adapted to also gradually release said second additional substance on interacting with said biological organisms present in said environment.

In a preferred embodiment, the mentioned aromatizing agent is a composition of aromas, fragrances and/or natural essential oils.

A preferred composition of the gel proposed by the present invention is as follows:
- a natural or synthetic gelling agent obtained from polymers in a proportion equal to or less than 2.00%;
- Aluminium sulphate, metal salt or similar in a proportion equal to or less than 0.20%.
- food colorant in a proportion equal to or less than 0.10%;
- aromatising agent, fragrance and/or natural essential oil in a proportion equal to or less than 2.00%;
- nutrient elements and/or other additive components, such as rooting hormones and vitamins in a proportion equal to or less than 2.00%; and
- water at least decalcified, obtained through decalcification or other method, in a proportion equal to or less than 98.00%.

For an embodiment said gelling agent is of the disodium salt carboxylmethylcellulose type.

The proposed gel also comprises nutrient elements or substances trapped in said gelled mass, in order to produce direct nutrition of said plants or parts of plants or, if they are planted in a substrate, provide plant nutrition through fertilisation of said substrate.

The gel is adapted to also gradually release said nutrient elements on interaction with said biological organisms present in said environment.

In an embodiment, said aromatising agent also has attributed to itself various other properties, such relaxant, decongestive and/or repellents against flies, mosquitoes and other insects, depending on the type or combination of employed aromatising agents.

In another embodiment, it has been foreseen the incorporation of a biocide agent, in other words, an active substance or preparation containing one of more active substances intended to destroy, counteract, neutralise, prevent the action of, or exercise another type of control over any harmful organism to plants, by chemical or biological means by adding said biocide agent to the gel described up to this point.

In accordance with a preferred embodiment of this invention, the gel or gelled product according to a composition such as those previously described, comprises a biocide agent that is harmless to plants in a proportion equal to or less than 2.00% in weight with respect to the total gel weight.

Through the addition of the cited biocide agent, it is possible to avoid the early decomposition of the gel or gelled product through any circumstance or agent that could cause the contamination of the same.

The inventors have confirmed that an eventual contamination of the prepared gel can have serious repercussions on its purpose. Said contamination may be caused by any microbial agent of any type capable of producing the same effect as if said gel were in contact with an organic medium rich in microorganisms.

Moreover, the own water employed in preparing the gel, because of any microorganism existing within said fluid due to inadequate filtration or purification, could produce contamination leading to gel degradation, even when correctly packed, which could make it useless for its previously described functionality.

In order to correct this drawback, which could be produced in the employment of the gel in accordance with any of the compositions of the corresponding described embodiments and, in order to prevent degradation of the product prior to its application, the inventors propose here to add to the resulting composition a sufficient quantity of a biocide agent, of around 2.00% maximum by weight with respect to the total gel weight, depending on the biocide effect of the employed product, employing any of those existing on the market that do not have any known harmful effect on plants and so make it suitable for its application on plants living with or without soil.

By subjecting the gel to various stability tests, environmental contact treatments with different duration times, temperatures and conditions, results have been confirmed that, with the use of a biocide agent added to the mixture that conforms the gel, show improvement in the conservation and stability of said gel when compared to gels obtained from mixtures to which no type of biocide or preservative agent has been added which, due to external factors or those deriving from the own ingredients that constitute said mixtures, can suffer from premature contamination, mainly microbiological, capable of significantly degrading the gel or inducing degradation in the gel that largely disables its functionality, both its hydration functionality and that derived from its colorant effect.

The addition of a biocide agent significantly affect in that those gel compositions on which it is employed can conserve their properties with respect to the purposes proposed for each of them, with the main one being their hydration power on the plants to which they are applied, together with soils when this is the case, and their nutritive, colorant and decorative capabilities, etc., among other functions given these gel compositions.

The proposed gel is preferably applicable to plants living without soil and in all plants and/or flowers that have been cut, ensuring through its application that they are maintained fresh for a long time, with the gel composition being susceptible to be varied in function of the plant or flower to be treated, without, for example, any need to include the above commented rooting hormones in the case of cut flowers without roots.

In either of the above cases, i.e. flowers with cut stems or plants able to live without soil, the use of the gel will be applied using transparent or translucent containers, such as jars or vases, in order to appreciate the decorative effect, provided by the colorant agent or agents, from the exterior.

However, although to a lesser extent, the proposed gel is also applicable to plants or flowers planted in soil, for example, in a flowerpot, although obviously the decorative effects will be much less than in the case of the commented transparent or translucent containers.

The use of the gel is quite simple, basically consisting of placing the plant in a container and filling the same, at least partly, with the proposed gel with a quantity considered necessary and sufficient to maintain the plant for a determined period of time in function of the gel composition or of a combination of compositions considered as the most adequate for the type and quantity of plants to be treated or for the desired decorative effect intended to provide.

The proposed gel permits to maintain the plants hydrated, together with making it possible, once the product is in an appropriate container which is intended to contain the plant, to decorate the locations in which they are located and under the same gel property, with the gradual release of the contained aromas, fragrances and/or essential oils, to perfume and to air freshen the same locations.

In the same way, the gel itself, can be provided in its composition of other components and/or products for the purpose of providing the plants to be treated with the necessary nutrients, at the same time as producing a triple action: decorate, to air freshen/perfume and maintain the supply of water and correct degree of hydration for the plants.

A person skilled in the art would be able to introduce changes and modifications in the described embodiments without leaving the scope of the invention as it is defined in the attached claims.

## Claims

1. A hydraling gel applicable to the hydration of plants or parts of plants comprising suitable substances for producing said hydration, said gel is
adapted to gradually release at least said substances on interaction with biological organisms present in the environment in which it is applied, providing slow dispensing of said substances, said hydrating gel comprising an additional first substance consisting of a colorant agent trapped in said gel
said hydrating gel being **characterised in that** it comprises at least a second additional substance consisting of an aromatising agent trapped in said gel and **in that** it is adapted to also gradually release said second additional substance on interacting with said biological organisms present in said environment.

2. A gel in accordance with claim 1, **characterised in that** said aromatising agent is a composition of aromas, fragrances and/or natural essential oils.

3. A gel in accordance with claim 2, **characterised in that** it comprises nutrient elements or substances, trapped in said gelled mass, to produce direct nutrition of said plants or parts of plants, or if they are planted in a substrate, to produce the nutrition of the plants by fertilising said substrate, and **in that** it is adapted to also gradually release said nutrient elements on interacting with said biological organisms present in said environment.

4. A gel in accordance with claim 3, **characterised in that** it is composed by:
- a natural or synthetic gelling agent in a proportion equal to or less than 2.00%,
- aluminium sulphate or metal salt in a proportion equal to or less than 0.20%.
- a colorant agent in a proportion equal to or less than 0.10%,
- an aromatising agent and/or natural essential oil in a proportion equal to or less than 2.00%,
- nutrient elements and/or other additive components in a proportion equal to or less than 2.00%, and
- water at least decalcified in a proportion equal to or less than 98.00 %.

5. A gel in accordance with claim 4, **characterised in that** said gelling agent is of the disodium salt carboxylmethylcellulose type.

6. A gel in accordance with claim 4, **characterised in that** said synthetic gelling agent is of the polymeric type.

7. A gel in accordance with claim 4, **characterised in that** said nutrient elements and/or additive components are at least one of a group comprising minerals, rooting hormones and vitamins.

8. A gel in accordance with any of the previous claims, **characterised in that** said colorant agent is of the food type.

9. A gel in accordance with claim 1 or 2, **characterised in that** said aromatising agent has also own characteristic properties, such as relaxing, decongestive and/or fly, mosquito or other insect repellents.

10. A gel in accordance with any of the previous claims **characterised in that** it additionally comprises a biocide agent.

11. A gel in accordance with claim 10, **characterised in that** said biocide agent is contained in said gel in a proportion equal to or less than 2% by weight, with respect to the total gel weight.

12. A gel in accordance with claim 10 or 11, **characterised in that** said biocide agent is harmless to plants.

## Patentansprüche

1. Hydrierendes Gel, welches für die Hydrierung von Pflanzen oder Pflanzenteile anwendbar ist, enthaltend geeignete Stoffe um die genannte Hydrierung zu bewirken, wobei das genannte Gel dazu angepasst ist, zumindest die genannte Stoffe allmählich durch die Wechselwirkung mit in der Umgebung, in der es angewendet wird, vorhandenen biologischen Organismen, freizusetzen, unter Bereitstellung einer langsamen Abgabe der genannten Stoffe, das genannte hydrierende Gel umfassend einen ersten zusätzlichen Stoff bestehend aus einem in dem genannten Gel eingeschlossenen Farbstoff, wobei das genannte hydrierende Gel **dadurch gekennzeichnet ist, dass** es zumindest einen zweiten zusätzlichen Stoff enthält, bestehend aus einem aromatisierenden, in dem genannten Gel eingeschlossenen Mittel, und dass es dazu angepasst ist, auch den genannten zweiten zusätzlichen Stoff allmählich durch die Wechselwirkung mit den genannten, in der genannten Umgebung vorhandenen, biologischen Organismen, freizusetzen.

2. Gel nach Anspruch 1, **dadurch gekennzeichnet, dass** das genannte aromatisierende Mittel eine Zusammensetzung aus Aromas, Düften und/oder natürlichen ätherischen Ölen ist.

3. Gel nach Anspruch 2, **dadurch gekennzeichnet, dass** es in der gelierten Masse eingeschlossene Stoffe oder Nährstoffelemente enthält, um die direkte Ernährung der genannten Pflanzen oder Pflanzenteile zu bewirken, oder wenn sie in einem Substrat bepflanzt sind, um die Ernährung der Pflanzen durch die Düngung des genanntes Substrats zu bewirken, und dass es dazu angepasst ist, auch die genannte Nährstoffelemente allmählich durch die Wechselwirkung mit den genannten, in der genannten Umgebung vorhandenen, biologischen Organismen, freizusetzen.

4. Gel nach Anspruch 3, **dadurch gekennzeichnet, dass** es aus:
- einem natürlichen oder synthetischen gelierenden Mittel in einem Verhältnis, das gleich oder weniger als 2,00% ist,
- Aluminiumsulfaten oder Metallsalzen in einem Verhältnis, das gleich oder weniger als 0,20% ist,
- einem Farbstoff in einem Verhältnis, das gleich oder weniger als 0,10% ist,
- einem aromatisierenden Mittel und/oder natürlichen ätherischen Öl in einem Verhältnis, das gleich oder weniger als 2,00% ist,
- Nährstoffelementen und/oder anderen Zusatzstoffkomponenten in einem Verhältnis, das gleich oder weniger als 2,00% ist, und
- zumindest entkalktem Wasser in einem Verhältnis, das gleich oder weniger als 98,00% ist,
besteht.

5. Gel nach Anspruch 4, **dadurch gekennzeichnet, dass** das genannte gelbindende Mittel vom Carboxylmethylcellulose-Dinatrium-Salz-Typ ist.

6. Gel nach Anspruch 4, **dadurch gekennzeichnet, dass** das genannte synthetische gelbindende Mittel vom polymerischen Typ ist.

7. Gel nach Anspruch 4, **dadurch gekennzeichnet, dass** die genannte Nährstoffelemente und/oder Zusatzstoffkomponenten zumindest einen aus der Gruppe, die Mineralstoffe, Bewurzelungshormone und Vitamine umfasst, sind.

8. Gel nach einem der vorhergehenden Ansprüche, **dadurch gekennzeichnet, dass** das genannte Farbstoff vom Lebensmittelfarbstoff-Typ ist.

9. Gel nach Anspruch 1 oder 2, **dadurch gekennzeichnet, dass** das genannte aromatisierende Mittel auch eigene kennzeichnende Eigenschaften aufweist, wie entspannende, dekongestive und/oder fliegen-, mücken- oder andere insektenabwehrende Eigenschaften.

10. Gel nach einem der vorhergehenden Ansprüche, **dadurch gekennzeichnet, dass** es zusätzlich ein biozides Mittel enthält.

11. Gel nach Anspruch 10, **dadurch gekennzeichnet, dass** das genannte biozide Mittel in dem genannten Gel in einem Verhältnis, das gleich oder weniger als 2 Gew.-% ist, in Bezug auf das gesamte Gel-Gewicht, beinhaltet ist.

12. Gel nach Anspruch 11 oder 12, **dadurch gekennzeichnet, dass** das genannte biozide Mittel unbedenklich für Pflanzen ist.

## Revendications

1. Gel hydratant applicable à l'hydratation de plantes ou de parties de plantes, comportant des substances appropriées pour produire cette hydratation, ce gel est adapté pour libérer graduellement au moins ces substances en interaction avec les organismes biologiques présents dans l'environnement dans lequel il est appliqué, en offrant une lente distribution de ces substances, ce gel hydratant comportant une première substance additionnelle consistant en un agent colorant emprisonné dans ce gel, ce gel hydratant étant **caractérisé en ce qu'**il comporte au moins une deuxième substance additionnelle d'un agent aromatisant emprisonnée dans ce gel et **en ce qu'**il est adapté pour également libérer graduellement cette deuxième substance additionnelle en interaction avec ces organismes biologiques présents dans cet environnement.

2. Un gel conformément à la revendication 1, **caractérisé en ce que** cet agent aromatisant est une composition d'arômes, parfums et/ou huiles essentielles naturelles.

3. Un gel conformément à la revendication 2, **caractérisé en ce qu'**il comporte des éléments ou substances nutritifs, emprisonnés dans cette masse gélifiée, pour produire une nutrition directe de ces plantes ou parties de plantes ou si elles sont plantées dans un substrat, pour produire la nutrition des plantes par fertilisation de ce substrat, et **en ce qu'**il est adapté pour également libérer graduellement ces éléments nutritifs par interaction avec ces organismes biologiques présents dans cet environnement.

4. Un gel conformément à la revendication 3, **caractérisé en ce qu'**il est composé de:
- un agent gélifiant naturel ou synthétique dans une proportion égale ou inférieure à 2,00%.
- un sulfate d'aluminium ou sel métallique dans une proportion égale ou inférieure à 0,20%.
- un agent colorant dans une proportion égale ou inférieure à 0,10%.
- un agent aromatisant et/ou une huile essentielle naturelle dans une proportion égale ou inférieure à 2,00%.
- des éléments nutritifs et/ou d'autres composants additifs dans une proportion égale ou inférieure à 2,00% et
- de l'eau au moins décalcifié dans une proportion égale ou inférieure à 98,00%.

5. Un gel conformément à la revendication 4, **caractérisé en ce que** cet agent gélifiant est du genre cellulose carboxyméthylique de sel disodique.

6. Un gel conformément à la revendication 4, **caractérisé en ce que** cet agent gélifiant synthétique est du genre polymérique.

7. Un gel conformément à la revendication 4, **caractérisé en ce que** ces éléments nutritifs et/ou composants additifs sont au moins l'un d'un groupe comportant des minéraux, hormones d'enracinement et vitamines.

8. Un gel conformément à un quelconque des revendications précédentes, **caractérisé en ce que** cet agent colorant est du genre aliment.

9. Un gel conformément à la revendication 1 ou 2, **caractérisé en ce que** cet agent aromatisant possède également ses propres propriétés caractéristiques, telles que de détente, décongestion et/ou de répulsifs à mouches, moustiques ou autres insectes.

10. Un gel conformément à une quelconque des revendications précédentes **caractérisé en ce qu'**il comporte en plus un agent biocide.

11. Un gel conformément à la revendication 10, **caractérisé en ce que** cet agent biocide se trouve contenu dans ce gel dans une proportion égale ou inférieure à 2% du poids par rapport au poids total du gel.

12. Un gel conformément à la revendication 10 ou 11, **caractérisé en ce que** cet agent biocide es inoffensif pour les plantes.
